# EUROPEAN PATENT APPLICATION

(11) **EP 4 647 983 A1**
(43) Date of publication of application: **12.11.2025**
(21) Application number: 25172405.0
(22) Date of filing: 24.04.2025
(51) Int. Cl.: G06Q 10/063, G06Q 10/10, G06Q 50/18

(54) **SYSTEM AND METHOD FOR ENCODING AND VISUALLY RENDERING PATENT PORTFOLIOS**

(30) Priority: 10.05.2024 US 202418661453
(71) Applicant: ADAMS, Phillip M., Afton WY 83110 (US)
(72) Inventor: ADAMS, Phillip M., Afton WY 83110 (US)
(74) Representative: Håmsø Patentbyrå AS

(57) **Abstract**

A method for identifying potential contraventions of law with respect to intellectual property rights is disclosed. In one embodiment, such a method identifies a set of related intellectual property rights, such as a patent portfolio made up of multiple patents and/or patent applications. The method analyzes the set to determine potential contraventions of law associated with the set. The method then encodes the related intellectual property rights as nodes in a directed acyclic graph capable of visual representation. Relationships between the related intellectual property rights may be encoded as connectors between the nodes. The method may emphasize particular nodes to indicate potential contraventions of law for the associated intellectual property rights. Similarly, the method may emphasize particular connectors to indicate potential contraventions of law for the associated relationships between the intellectual property rights. A corresponding system and computer program product are also disclosed and claimed herein.

## Description

### THE FIELD OF THE INVENTION

This invention relates to systems and methods for efficiently ascertaining the validity or enforceability of intellectual property rights.

### BACKGROUND OF THE INVENTION

With any intellectual property right, whether it be a patent, trademark, copyright, or the like, the jurisdiction having authority to grant and enforce the intellectual property right may set forth requirements for granting or maintaining the intellectual property right. These requirements may be set forth in statutes, regulations, or operating rules of the particular jurisdiction that is authorized to grant, enforce, and maintain the intellectual property right. In certain cases, these statutes, regulations, or operating rules may be established in accordance with treaties or agreements between multiple jurisdictions to provide consistency and enforceability across the jurisdictions.

In some cases, violation of or non-compliance with these requirements may be grounds for the jurisdiction to deny the grant of the intellectual property right. In other cases, later discovery of a violation or non-compliance with the requirements may be grounds for the jurisdiction to invalidate or deem unenforceable an intellectual property right that has already been granted. Because an organization may have many intellectual property rights and many of these intellectual property rights may be related, systems and methods are needed to quickly evaluate large sets of intellectual property rights to determine whether the intellectual property rights have potential issues with invalidity and/or unenforceability.

### SUMMARY OF THE INVENTION

The text and other materials of this patent application are subject to copyright protection by the Applicant. Applicant grants a royalty free license to copy the patent documents in their entirety and as maintained by the U.S. Patent and Trademark Office and/or European Patent Office for use in research or as prior art. Applicant authorizes no other use of the text and other materials such as block diagrams, architectural renderings, drawings, or other works embodied herein.

The invention has been developed in response to the present state of the art and, in particular, in response to the problems and needs in the art that have not yet been fully solved by currently available systems and methods. Accordingly, systems and methods have been developed for identifying potential contraventions of law with respect to intellectual property rights. The features and advantages of the invention will become more fully apparent from the following description and appended claims, or may be learned by practice of the invention as set forth hereinafter.

Consistent with the foregoing, a method for identifying potential contraventions of law with respect to intellectual property rights is disclosed. In one embodiment, such a method identifies a set of related intellectual property rights, such as a patent portfolio made up of multiple patents and/or patent applications. The method analyzes the set to determine potential contraventions of law associated with the set. For example, the method may analyze the set to identify issues with inventorship, claims of priority, filing bar dates, entity status, or the like. The method then encodes the related intellectual property rights as nodes in a directed acyclic graph capable of visual representation. Relationships between the related intellectual property rights may be encoded as connectors between the nodes. The method may emphasize particular nodes to indicate potential contraventions of law for the associated intellectual property rights. Similarly, the method may emphasize particular connectors to indicate potential contraventions of law for the associated relationships between the intellectual property rights.

In certain embodiments, encoding the related intellectual property rights as nodes further includes providing attributes associated with the related intellectual property rights that are displayable on the nodes. These attributes may include, for example, patent number, patent application serial number, practitioner registration number, application type, filing date, entity status, or the like.

Furthermore, in certain embodiments, emphasizing nodes and connectors may include using at least one of line color, fill color, line weight, line type, line pattern, object shape, and labels to accentuate the nodes and/or connectors. For example, in certain embodiments, the connectors may be labeled with attributes of the corresponding relationships to assist in identifying potential contraventions of law with respect to nodes associated with the relationships. In other embodiments, the connectors themselves or particular nodes and/or attributes associated with the nodes may be highlighted to identify potential contraventions of law with respect to the associated intellectual property rights and/or relationships between the intellectual property rights. This may assist a user in quickly identifying potential contraventions of law for a large set of intellectual property rights, such as a large patent portfolio.

A corresponding system and computer program product are also disclosed and claimed herein.

### BRIEF DESCRIPTION OF THE DRAWINGS

In order that the advantages of the invention will be readily understood, a more particular description of the invention briefly described above will be rendered by reference to specific embodiments illustrated in the appended drawings. Understanding that these drawings depict only typical embodiments of the invention and are not therefore to be considered limiting of its scope, the embodiments of the invention will be described and explained with additional specificity and detail through use of the accompanying drawings, in which:
Figure 1 is a high-level block diagram showing one example of a computing system for use in implementing a system and method in accordance with the invention;
Figure 2 is a high-level block diagram showing various modules that may be included in a system in accordance with the invention;
Figure 3 is a process flow diagram showing one embodiment of a method in accordance with the invention;
Figure 4 is a high-level diagram showing one example of a directed acyclic graph representing a patent portfolio;
Figure 5 shows the directed acyclic graph of Figure 4 with emphasis placed on node attributes and a connector to identify a potential contravention of law with respect to entity status;
Figure 6 shows the directed acyclic graph of Figure 4 with emphasis placed on node attributes and a connector to identify a potential contravention of law with respect to a claim of priority;
Figure 7 shows the directed acyclic graph of Figure 4 with labeled connectors to identify potential issues with inventorship;
Figure 8 is a high-level block diagram showing a larger example of a directed acyclic graph and more particularly showing emphasis or highlighting placed on various nodes and connectors to quickly identify potential contraventions of law; and
Figures 9 and 10 show one embodiment of an encoding of a directed acyclic graph that may be rendered to visually represent a patent portfolio and associated potential contraventions of law.

### DETAILED DESCRIPTION OF THE INVENTION

It will be readily understood that the components of the present invention, as generally described and illustrated in the Figures herein, could be arranged and designed in a wide variety of different configurations. Thus, the following more detailed description of the embodiments of the invention, as represented in the Figures, is not intended to limit the scope of the invention, as claimed, but is merely representative of certain examples of presently contemplated embodiments in accordance with the invention. The presently described embodiments will be best understood by reference to the drawings, wherein like parts are designated by like numerals throughout.

The present invention may be embodied as a system, method, and/or computer program product. The computer program product may include a computer readable storage medium (or media) having computer readable program instructions thereon for causing a processor to carry out aspects of the present invention.

The computer readable storage medium may be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages.

The computer readable program instructions may execute entirely on a user's computer, partly on a user's computer, as a stand-alone software package, partly on a user's computer and partly on a remote computer, or entirely on a remote computer or server. In the latter scenario, a remote computer may be connected to a user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, may be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus, or other device to produce a computer implemented process, such that the instructions which execute on the computer, other programmable apparatus, or other device implement the functions/acts specified in the flowchart and/or block diagram block or blocks.

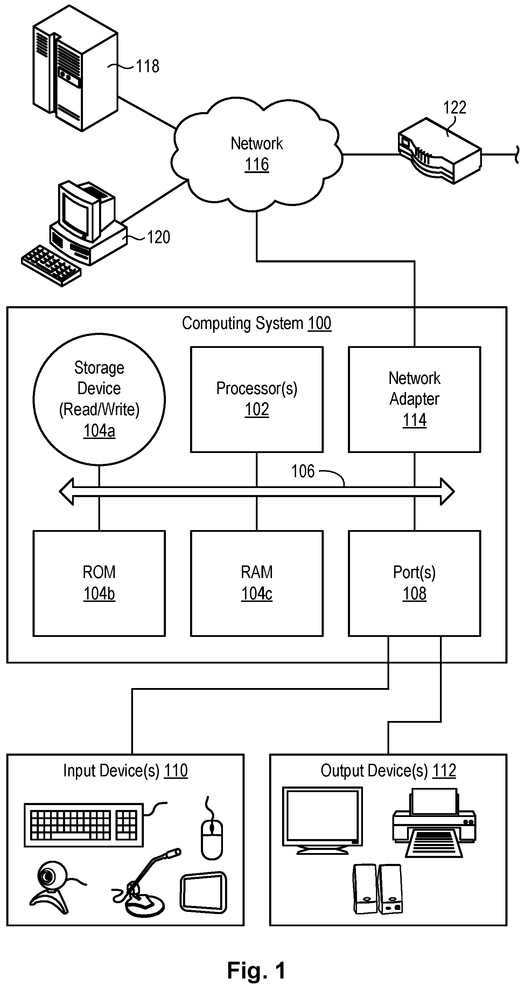

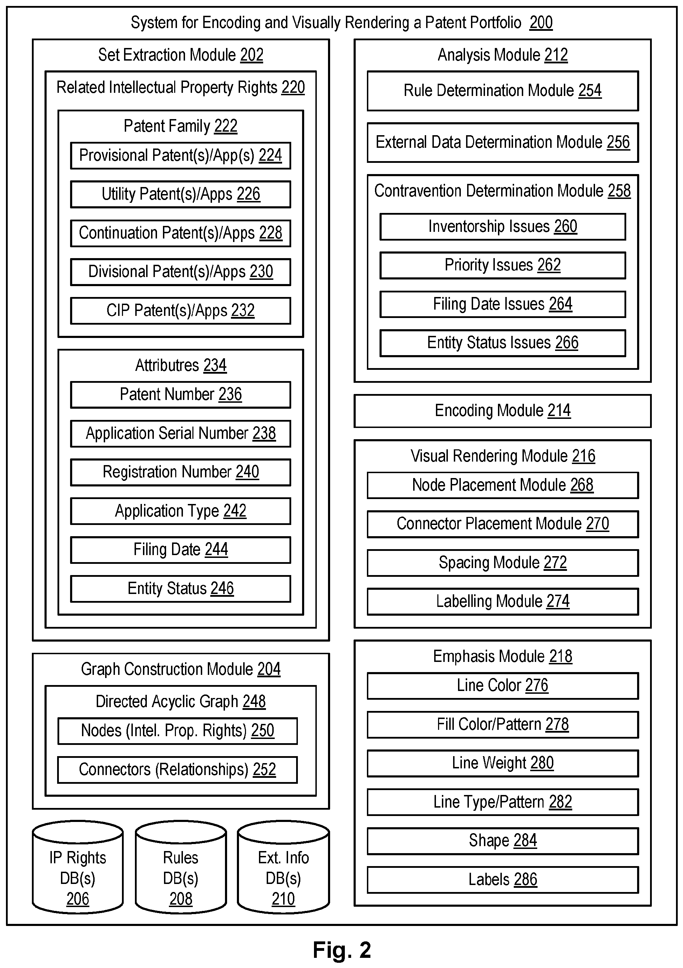

Referring to Figure 1, one example of a computing system 100 is illustrated. The computing system 100 is presented to show one example of an environment where a system 200 in accordance with the invention, as discussed in association with Figure 2, may be developed and/or executed. The computing system 100 may be embodied as a desktop computer, a workstation, a laptop computer, a server, a storage controller, a mobile device such as a smart phone or tablet, or the like. The computing system 100 is presented by way of example and is not intended to be limiting. Indeed, the system 200 disclosed herein may be implemented on a wide variety of different computing systems in addition to the computing system 100 shown. The system 200 may also potentially be distributed across multiple computing systems 100.

As shown, the computing system 100 includes at least one processor 102 and may include more than one processor 102. The processor 102 may be operably connected to a memory 104. The memory 104 may include one or more non-volatile storage devices such as hard drives 104a, solid state drives 104a, CD-ROM drives 104a, DVD-ROM drives 104a, tape drives 104a, or the like. The memory 104 may also include non-volatile memory such as a read-only memory 104b (e.g., ROM, EPROM, EEPROM, and/or Flash ROM) or volatile memory such as a random access memory 104c (RAM or operational memory). A bus 106, or plurality of buses 106, may interconnect the processor 102, memory devices 104, and other devices to enable data and/or instructions to pass therebetween.

To enable communication with external systems or devices, the computing system 100 may include one or more ports 108. Such ports 108 may be embodied as wired ports 108 (e.g., USB ports, serial ports, Firewire ports, SCSI ports, parallel ports, etc.) or wireless ports 108 (e.g., Bluetooth, IrDA, etc.). The ports 108 may enable communication with one or more input devices 110 (e.g., keyboards, mice, touchscreens, cameras, microphones, scanners, storage devices, etc.) and output devices 112 (e.g., displays, monitors, speakers, printers, storage devices, etc.). The ports 108 may also enable communication with other computing systems 100.

In certain embodiments, the computing system 100 includes a wired or wireless network adapter 114 to connect the computing system 100 to a network 116, such as a local area network (LAN), wide area network (WAN), storage area network (SAN), or the Internet. Such a network 116 may enable the computing system 100 to connect to or communicate with one or more servers 118, workstations 120, personal computers 120, mobile computing devices, or other devices. The network 116 may also enable the computing system 100 to connect to or communicate with another network by way of a router 122 or other device 122. Such a router 122 may allow the computing system 100 to communicate with servers, workstations, personal computers, or other devices located on different networks.

Referring to Figure 2, as previously mentioned, with any intellectual property right, whether it be a patent, trademark, copyright, or the like, the jurisdiction having authority to grant and enforce the intellectual property right may set forth requirements for granting or maintaining the intellectual property right. These requirements may be set forth in statutes, regulations, or operating rules of the particular jurisdiction that is authorized to grant, enforce, and maintain the intellectual property right. In certain cases, these statutes, regulations, or operating rules may be established in accordance with treaties or agreements between multiple jurisdictions to provide consistency and enforceability across the jurisdictions.

In some cases, violation of or non-compliance with these requirements may be grounds for the jurisdiction to deny the grant of the intellectual property right. In other cases, later discovery of a violation or non-compliance with the requirements may be grounds for the jurisdiction to invalidate or deem unenforceable an intellectual property right that has already been granted.

In litigation or disputes involving intellectual property, many intellectual property rights (e.g., patents, trademarks, etc.) may be involved. Determining liability between parties in such litigation or disputes may ultimately depend on the validity or enforceability of the underlying intellectual property rights. Thus, challenging the validity or enforceability of such intellectual property rights can be one way to avoid liability, or provide a party in the dispute freedom to operate in a space previously clouded or protected by the intellectual property right. Nevertheless, performing due diligence necessary to determine the validity or enforceability of such intellectual property rights, or potential issues with the validity or enforceability of such intellectual property rights, may be a time-consuming and laborious process, not only because many facts may be associated with each intellectual property right, but also because many statutes, regulations, and/or operating rules may govern its validity or enforceability.

These problems may be compounded by the fact that the validity or enforceability of intellectual property rights may not be determined in isolation. For example, in certain cases, the validity or enforceability of intellectual property rights may depend on the validity or enforceability of other related intellectual property rights. For example, the validity or enforceability of a patent may, in some cases, affect the validity or enforceability of other patents in the same patent family. In other cases, analyzing data associated with a patent family and/or relationships between patents within a patent family may be used to identify potential issues affecting the validity or enforceability of various patents in the patent family.

In view of the foregoing, what are needed are systems and methods to determine the validity or enforceability of intellectual property rights, provide information that may be useful to challenge the validity or enforceability of intellectual property rights, or at least raise flags with respect to issues that may affect the validity or enforceability of intellectual property rights. Further needed are systems and methods to determine the validity or enforceability of intellectual property rights by gathering facts associated with the intellectual property rights and applying these facts to statutes, regulations, or operating rules that affect their validity or enforceability. Ideally, such systems and methods will perform these tasks in an automated and efficient manner to facilitate the evaluation of many intellectual property rights in a short amount of time.

As shown in Figure 2, in certain embodiments, a system 200 may be provided for encoding and visually rendering a set of intellectual property rights, such as a patent portfolio. This system 200 may be useful to quickly and efficiently evaluate a large set of related intellectual property rights and identify potential contraventions of law with respect to the set. For example, when the set of intellectual property rights is a patent portfolio, the system 200 may identify potential issues with inventorship, ownership, assignments, claims of priority, filing bar dates, entity status assertions, judgements, or the like. Any of these issues may affect the validity and/or enforceability of patents or patent applications in the portfolio.

The system 200 of Figure 2 is a high-level block diagram showing various modules that may be used to implement different features and functions. These modules may be implemented in hardware, software, firmware, or combinations thereof. The modules are presented by way of example and not limitation. More or fewer modules may be provided in different embodiments. For example, the functionality of some modules may be combined into a single or smaller number of modules, or the functionality of a single module may be distributed across several modules.

As shown, in certain embodiments, the system 200 includes one or more of a set extraction module 202, graph construction module 204, analysis module 212, encoding module 214, visual rendering module 216, and emphasis module 218. The system 200 may also interface with various types of databases, including, for example, an intellectual property rights database 206, rules database 208, and external information database 210.

The set extraction module 202 may be configured to extract a set of related intellectual property rights 220 (e.g., a set of related patents and/or patent applications) from an intellectual property rights database 206 (e.g., a patent database). In certain embodiments, the intellectual property rights database 206 is a publicly available database such as the Patent Public Search database publicly offered by the U.S. Patent and Trademark Office. In other embodiments, the intellectual property rights database 206 is a private database such as a database that has been acquired or licensed from a purveyor of a public intellectual property right database 206. Such databases may, in certain cases, be acquired or licensed for private analysis.

Where the related intellectual property rights 220 are patents or patent applications, the set of related intellectual property rights 220 may include one or more patent families 222. These patent families may include, for example, one or more provisional patents or patent applications 224, utility patents or patent applications 226, continuation patents or patent applications 228, divisional patents or patent applications 230, continuation-in-part patents or patent applications 232, or the like. The patents or patent applications may be related in that they may claim priority back to one or more common patents or patent applications. They may also share common subject matter and/or inventors.

In certain embodiments, extracting a set of related intellectual property rights 220 from an intellectual property rights database 206 includes extracting attributes 234 associated with the intellectual property rights. These attributes 234 may include, for example, patent number 236 (or a number such as a publication number 236), application serial number 238, patent practitioner registration number 240, application type 242, filing date 244, entity status 246, and other types of information such as claims of priority associated with a patent or patent application. These represent just a few examples of attributes 234 and are not intended to be limiting.

Using the information extracted by the set extraction module 202, the graph construction module 204 may construct a directed acyclic graph 248 representing the set of intellectual property rights. This directed acyclic graph 248 may be made up of nodes 250, where each node represents an intellectual property right such as a patent or patent application, and directed connectors 252 between the nodes 250, where each directed connector 252 represents a relationship (e.g., a claim of prioritiy) between intellectual property rights. The graph is "acyclic" in that there are no cycles in the graph, meaning that there is no sequence of connectors 252 that starts and ends at the same node 250. Thus, information in the directed acyclic graph 248 may flow in a single direction such that there are no loops or circular dependencies, thereby distinguishing the directed acyclic graph 248 from a cyclic graph. In general, the directed acyclic graph 248 provides a flexible and efficient way to model and analyze a set of intellectual property rights having relationships and dependencies therebetween.

The analysis module 212 may then analyze the intellectual property rights and associated relationships in the directed acyclic graph 248 to identify potential contraventions of law. To accomplish this, the analysis module 212 may, in certain embodiments, utilize a rule determination module 254 and an external data determination module 256.

The rule determination module 254 may determine rules setting forth requirements for granting or maintaining intellectual property rights. Rules may include one or more of statutes, regulations, operational rules, case law, administrative decisions, or the like, for a particular jurisdiction. As an example, in the United States, patent statutes may include the patent laws in Title 35 of the United States Code, patent regulations may include Title 37 of the Code of Federal Regulations, and operational rules may include the Manual of Patent Examining Procedure (MPEP) which assists examiners, attorneys, and the public with applying the United States patent statutes and regulations.

In some cases, different jurisdictions (e.g., countries, states, economic alliance, etc.) may utilize different databases 208 to store their intellectual property rules. In certain embodiments, the rule determination module 254 may retrieve the rules from such databases 208 for application to the intellectual property rights and relationships in the directed acyclic graph 248.

In some cases, external data may be utilized to determine if a rule was potentially violated. For example, in the United States, an organization may assert a certain "entity status" that indicates whether the organization is large entity, small entity, or micro entity. The entity status assertion is important for patent applicants and owners since it affects the costs for obtaining and maintaining a patent. Applicants must accurately determine their entity status at the time of filing and must notify the USPTO of any changes in entity status during the pendency of a patent application or after a patent is granted. Failure to properly assert the correct entity status may result in the imposition of penalties or loss of patent rights.

Entity status in U.S. patent law is determined based on various factors, primarily relating to the nature and size of an entity applying for or owning a patent. These factors include, for example, the nature of an applicant or owner (i.e., whether the applicant or owner is an individual inventor, a small business concern, a nonprofit organization, or a large corporation), the size and revenue of the entity (i.e., the number of employees and average annual receipts of the entity), number of previous patent filings of the entity, as well other eligibility criteria. In some cases, the correct entity status for an entity on a particular date may be determined using publicly available information provided in external information databases 210, such as databases 210 publicly accessible over the Internet. In certain embodiments, the external data determination module 256 may access such external information databases 210 to ascertain a proper entity status of an entity on a particular date for utilization by the contravention determination module 258. If the entity status asserted by an entity in association with a particular patent or patent application does not correspond to what appears to be a correct entity status for that date as ascertained from publicly available or other information, the contravention determination module 258 may identify a potential contravention of law with respect to the issue of entity status. Such a contravention of law may indicate to a user that the patent or patent application has potential validity or enforceability issues.

As shown, the contravention determination module 258 may be configured to determine potential contraventions of law with respect to a set of intellectual property rights for various issues. For example, in certain embodiments, the contravention determination module 258 may identify whether a patent or patent application has one or more of inventorship issues 260, priority issues 262 (i.e., whether a patent or patent application has defects in claiming priority to another patent or patent application), filing date issues 264 (i.e., whether a patent or patent application missed a required filing date for patent eligibility or to properly claim priority), and entity status issues 266. For the purposes of this description, the phrase "potential contravention of law" is used broadly to include a potential violation or inconsistency with a statute, regulation, operating rule, case law, administrative decisions, or the like, in a particular jurisdiction.

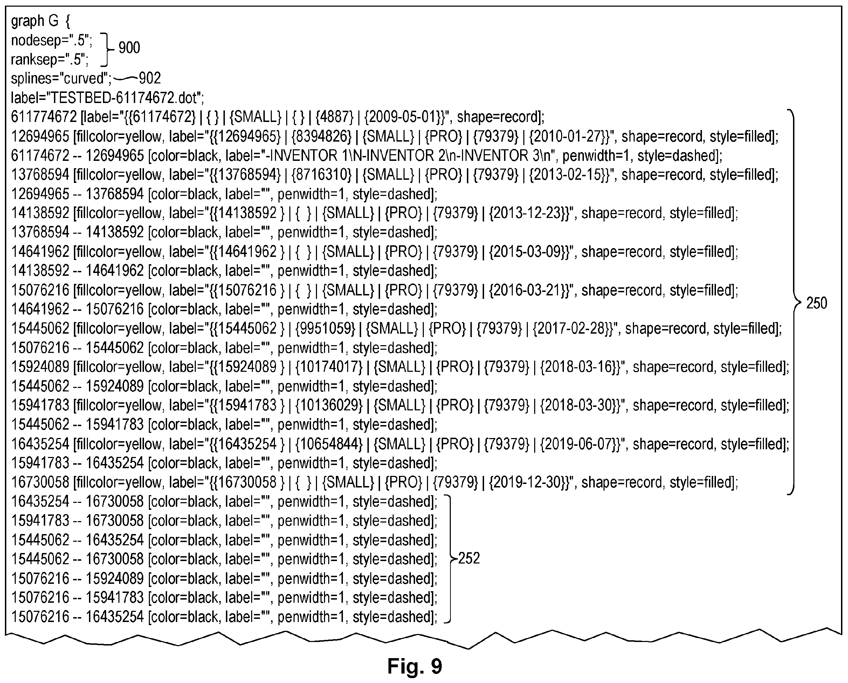

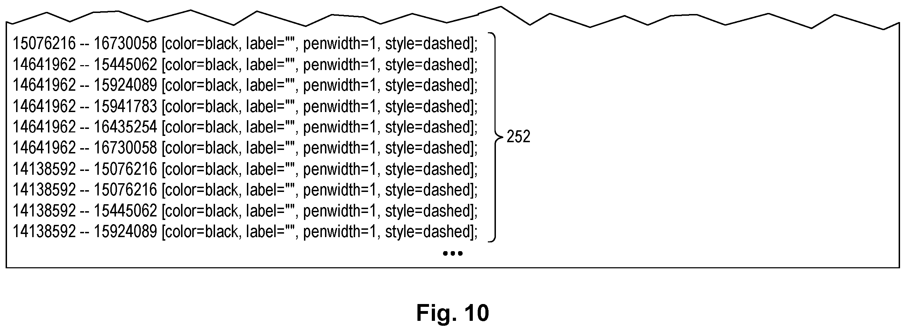

The encoding module 214, by contrast, may be configured to encode the directed acyclic graph 248 for visual rendering. That is the encoding module 214 may place the directed acyclic graph 248 in a format for processing by a visual rendering module 216. This may include encoding data with respect to potential contraventions of law identified in the set of intellectual property rights and relationships that is represented by the directed acyclic graph 248. In certain embodiments, the encoding is performed by the encoding module 214 after construction of the directed acyclic graph 248. In other embodiments, the encoding is performed at the time of constructing the directed acyclic graph 248. One example of an encoding will be discussed in association with Figures 9 and 10.

Using the encoding produced by the encoding module 214, the visual rendering module 216 may visually render, on a display device, the directed acyclic graph 248 for viewing by a user. To accomplish this, a node placement module 268 may visually distribute nodes of the directed acyclic graph 248 on the display device to indicate their relationships and/or dependencies. For example, priority (i.e., parent) patents or patent applications may be presented at a top of a display with child patents or patent applications presented below the priority patents or patent applications. Grandchildren of the children may be presented below the children to show the lineage of the patent family. In certain embodiments, the patents or patent applications may span jurisdictions. For example, a national filing may serve as a priority document for patents or patent applications in other countries. In other embodiments, all the patents or patent applications in the patent family are from a single jurisdiction. In general, the visual rendering module 216 may create a tree-like structure that shows the relationships between nodes 250 except that unlike a hierarchical tree structure, a node 250 in the directed acyclic graph 248 may have multiple parents (i.e., a patent or patent application may claim priority to multiple parent patents or patent applications).

Once the nodes 250 are distributed in a logical manner, the connector placement module 270 may place connectors 252 (also referred to as "edges") between the nodes 250 to indicate relationships therebetween. This may be as simple as providing a line between related nodes 250. In certain embodiments, the lines are curved to provide an aesthetically pleasing appearance as well as to route the lines so that they do not overlap the nodes 250. The spacing module 272 may ensure that adequate spacing exists between the nodes 250 and connectors 252 to provide desired information such as labels on the nodes 250 or connectors 252. For example, in certain embodiments, the connectors 252 are labeled with changes to inventorship that occur between nodes 250 and the spacing module 272 ensures that there is adequate space to provide these labels while minimizing overlap with other nodes 250 or connectors 252 in the directed acyclic graph 248. Once the directed acyclic graph 248 is presented with adequate spacing between nodes 250 and connectors 252, the labeling module 274 may label the nodes 250 and/or connectors 252 with desired information.

When potential contraventions of law are identified, the emphasis module 218 may emphasize where the potential contraventions of law were found in the directed acyclic graph 248. This may be accomplished, for example, using one or more of line color 276, fill color/pattern 278, line weight 280, line type/pattern 282, shape 284, labels 286, or the like. For example, where a potential contravention of law is found in association with a node 250 (i.e., a patent or patent application), the node 250 may be highlighted with a particular fill color 278 to make it stand out from other nodes 250 in the directed acyclic graph 248. The whole node 250 may be highlighted with the fill color 278 or certain attributes 234 displayed on the node 250 that are related to the potential contravention of law may be highlighted with the fill color 278. If the potential contravention of law is related to multiple nodes 250, then the multiple nodes 250 may be highlighted to make them stand out in the directed acyclic graph 248. The nodes 250 may also potentially be emphasized or highlighted by changing the line color of the nodes 250, the line weight of the nodes 250, the line type of the nodes 250, the shape of the nodes 250, and/or the like. These represent just a few examples and are not intended to be limiting.

Similarly, if a potential contravention of law is found for a particular relationship, the emphasis module 218 may emphasize the connector 252 used to represent the relationship. This may be accomplished by altering one or more of the line color, line weight, or line type or pattern of the associated connector 252. Alternatively, or additionally, the connector 252 may be labeled with information related to the potential contravention of law. For example, if a potential contravention of law related to inventorship is identified between nodes 250 (i.e., patents or patent applications) in the directed acyclic graph 248, the connector 252 may be labeled with the inventors that have changed between the nodes 250. Alternatively all connectors 252 may be labeled with the inventors that have changed between the associated nodes 250 and only those labels or connectors 252 where potential inventorship issues have been found may be emphasized or highlighted. These represent just a few examples and are not intended to be limiting.

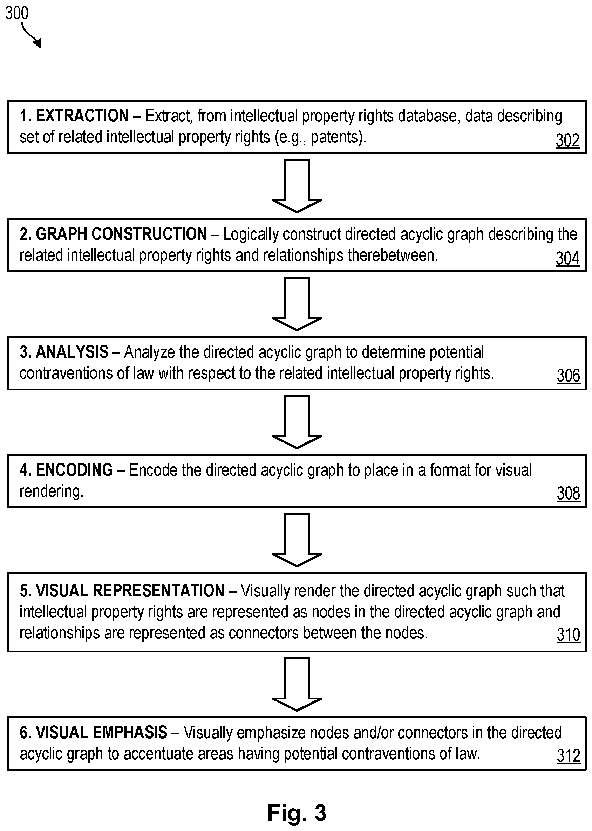

Referring to Figure 3, one embodiment of a method 300 for identifying potential contraventions of law with respect to a set of intellectual property rights is illustrated. As shown, the method 300 initially extracts 302, from an intellectual property rights database 206, data describing a set of intellectual property rights, such as a family of patents and/or patent applications. This data may include attributes 234 such as patent number 236 or other identifying indicia, application serial number 238, patent practitioner registration number 240, application type 242, filing date 244, entity status 246, and other information such as claims of priority associated with the patents or patent applications in the patent family.

The method 300 then logically constructs 304 a directed acyclic graph 248 describing the related intellectual property rights and relationships between the intellectual property rights. This may include defining data structures to represent the nodes 250 and the relationships in the directed acyclic graph 248. Each of the nodes 250 may be assigned attributes 234 associated with the nodes 250. In certain embodiments, an adjacency list or adjacency matrix may be used to indicate connections between the nodes 250.

The method 300 may then analyze 306 the directed acyclic graph 248 to identify potential contraventions of law associated with the related intellectual property rights and relationships contained therein. This may, in certain embodiments, include determining rules (i.e., statutes, regulations, operational rules, case law, administrative decisions, etc.) for applying to the data in the directed acyclic graph 248. This may also, in certain embodiments, include accessing one or more external information databases 210, such as publicly available databases 210, to extract data that may be helpful in identifying potential contraventions of law. In general, this step 306 may apply facts to the rules to identify potential contraventions of law. In certain embodiments, this may be accomplished using artificial intelligence (AI) and machine learning (ML) based techniques such as inference.

The method 300 may then encode 308 the directed acyclic graph 248 into a format that is suitable for visual representation. This may include encoding any potential contraventions of law that have been discovered as well as any emphasis (e.g., highlighting, labels, etc.) to be placed on particular nodes 250 and/or connectors 252 of the directed acyclic graph 248. One embodiment of an encoding capable of visual representation will be discussed in association with Figure 9 and 10.

Once the directed acyclic graph 248 is properly encoded, the method 300 visually renders 310 the directed acyclic graph 248 such that intellectual property rights are visually represented as nodes 250 in the directed acyclic graph 248 and relationships between the intellectual property rights are visually represented as connectors 252 between the nodes 250. The method 300 further visually emphasizes 312 (e.g., highlights) nodes 250 and/or connectors 252 in the directed acyclic graph 248 to accentuate locations or areas where the analysis discovered potential contraventions of law.

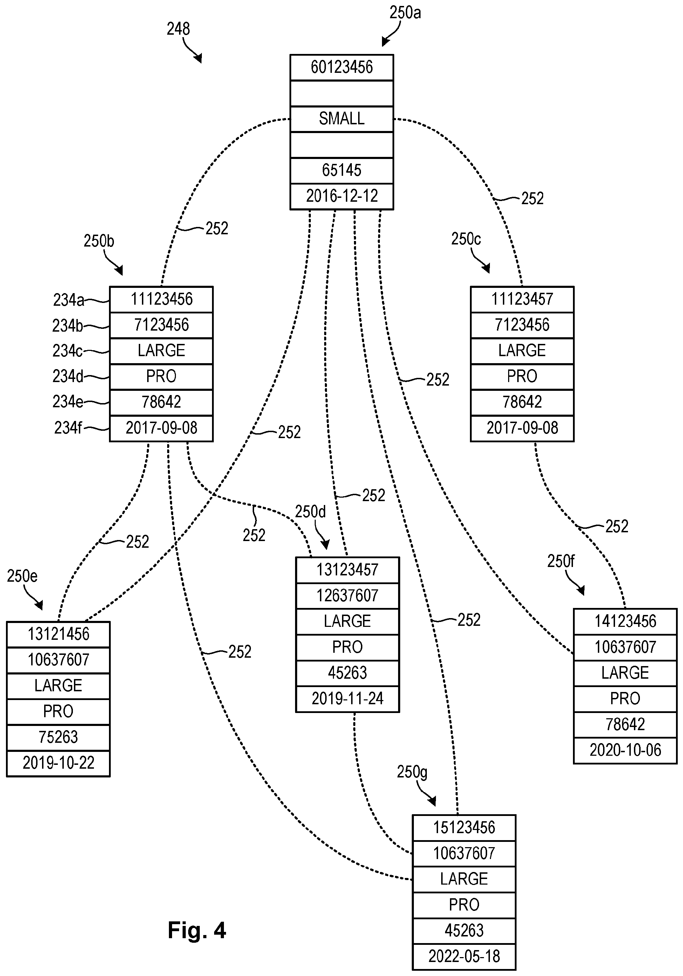

Referring to Figure 4, one example of a directed acyclic graph 248 is illustrated. This embodiment is provided simply as an example and is not intended to be limiting. As shown, the directed acyclic graph 248 includes a plurality of nodes 250a-g, where each node 250a-g represents a patent or patent application in a patent family. A connector 252 may be drawn between each related patent or patent application in the patent family to show claims of priority.

As shown, in certain embodiments, attributes 234 may be listed on each node 250 of the directed acyclic graph 248. For example, in the illustrated embodiment, each node 250b-g that represents a granted utility patent lists the application serial number 234a, patent number 234b, asserted entity status 234c, priority claimed 234d (e.g., PRO: claims priority from a provisional application, CON: claims priority as a continuation from a parent application, CIP: claims priority as a continuation-in-part from a parent application, etc.), patent practitioner registration number 234e, and filing date 234f. The top level node 250a represents a provisional patent application to which the other nodes 250b-g (i.e., granted patents) in the patent family claim priority. The top level node 250 may lack certain attributes 234 such as patent number 234b and priority claimed 234d that do not apply to provisional patent applications. The attributes 234 shown in Figure 4 are simply provided way of example and not limitation.

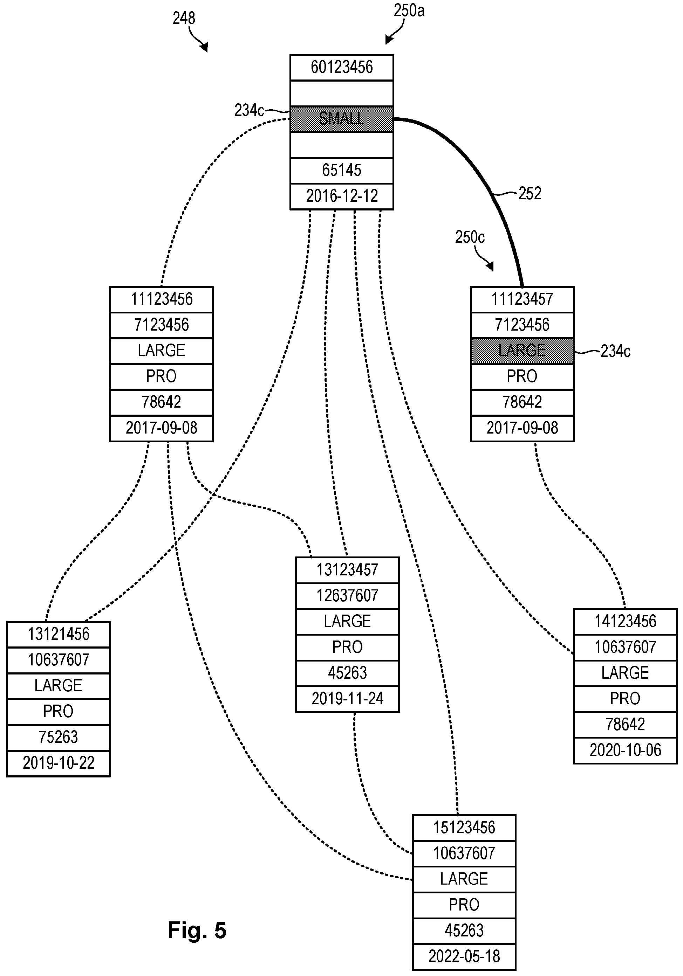

Referring to Figure 5, as previously mentioned, when potential contraventions of law are identified for intellectual property rights or relationships described in the directed acyclic graph 248, nodes 250, attributes 234, and or/connectors 252 associated with the potential contraventions of law may be emphasized (e.g., highlighted). For example, if an asserted entity status changes from one node 250a to another 250c and the analysis module 212 determines that the entity status assertion is likely incorrect (possibly the result of fraud) and represents a potential contravention of law, this may be emphasized in the directed acyclic graph 248. For example, in the illustrated embodiment, the associated entity status attributes 234c may be emphasized or highlighted using a vibrant fill color (e.g., yellow) to make them stand out. Additionally, the connector 252 may be emphasized or highlighted by making it bolder and/or with a vibrant color to make it stand out. These are simply examples of ways to emphasize or highlight a potential contravention of law within a directed acyclic graph 248 and are not intended to be limiting.

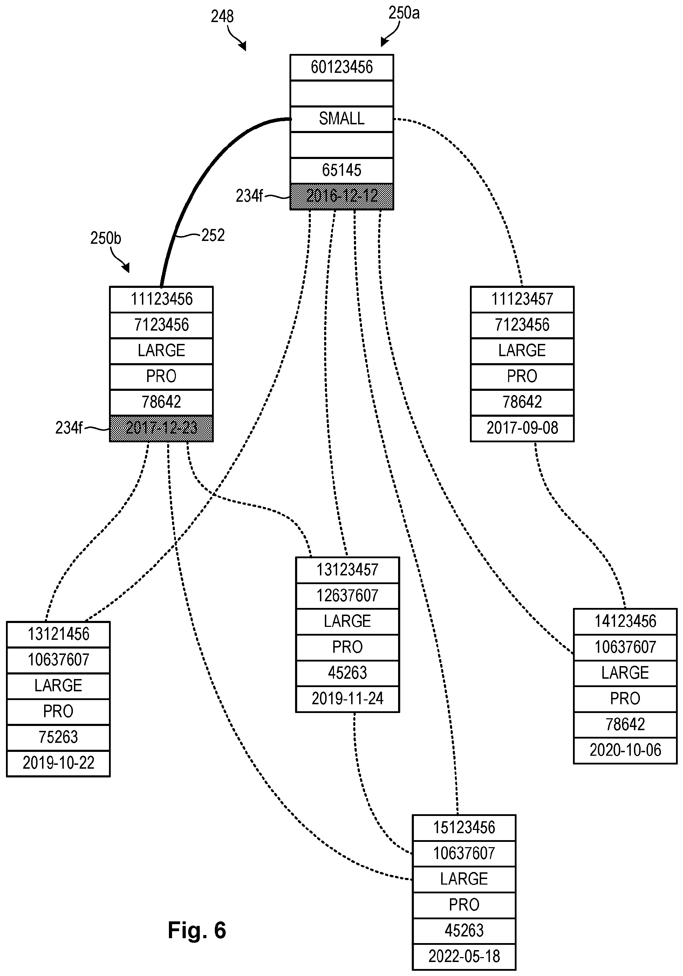

Referring to Figure 6, in another contemplated embodiment, if a first patent or patent application (i.e., node 250b) claims priority to a second node 250a but the analysis module 212 determines that the claim of priority is defective (e.g., past a one-year period required to make a valid claim of priority) and thus represents a potential contravention of law, this may be indicated in the directed acyclic graph 248 by emphasizing (e.g., highlighting) associated nodes 250, attributes 234, and/or connectors 252. For example, as shown in the illustrated embodiment, in order to emphasize or highlight the priority defect, the associated filing date attributes 234f may be emphasized or highlighted using a vibrant fill color (e.g., yellow). Additionally, the connector 252 between the associated nodes 250a, 250b may be emphasized or highlighted by making it bolder and/or with a more vibrant color.

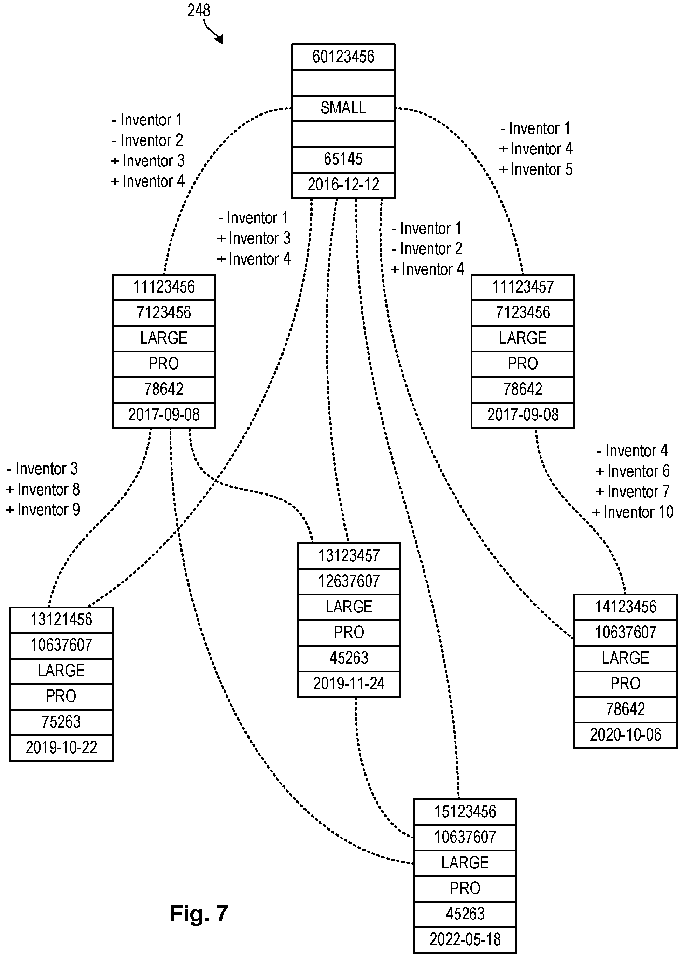

Referring to Figure 7, as previously mentioned, in certain embodiments, connectors 252 may be labeled with changes to inventorship that occur between nodes. This may assist a user to identify potential contraventions of law with respect to inventorship, such as an entity adding an individual as an inventor who may not be a true inventor, or removing a bona fide inventor from a patent or patent application. For example, as shown in Figure 7, in certain embodiments, each connector may be labeled with inventors that have been added to a child patent or patent application (as indicated by the "+" symbol with the inventor name) relative to its parent patent or patent application. Each connector may also be labeled with inventors that have been removed from the child patent or patent application (as indicated by the "-" symbol with the inventor name) relative to its parent patent or patent application. This may assist a user in quickly identifying any potential contraventions of law with respect to inventorship.

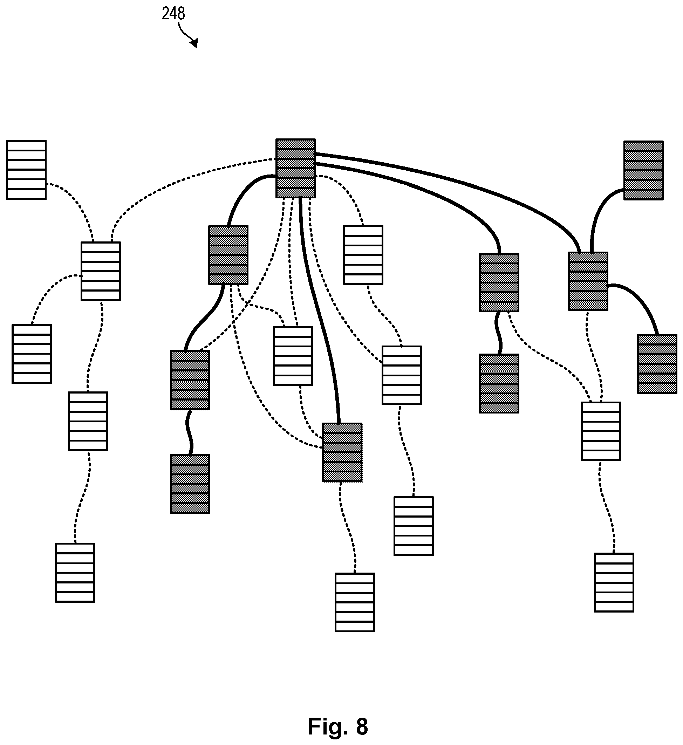

Referring to Figure 8, one of the benefits of the disclosed system 200 for encoding and visually rendering a set of intellectual property rights is its ability to quickly identify potential contraventions of law in a very large set of intellectual property rights, such as a large patent family. Even when looking at the directed acyclic graph 248 from a distance, emphasizing or highlighting nodes 250, attributes 234, and/or connectors 252 in the directed acyclic graph 248 may assist a user to immediately identify areas of the directed acyclic graph 248 where potential contraventions of law may exist. For example, Figure 8 shows one example of a directed acyclic graph 248 that is significantly larger than those disclosed in Figures 4-7. As shown in Figure 8, by emphasizing or highlighting particular nodes 250, attributes 234, and/or connectors 252 in the directed acyclic graph 248, a user's eyes may be immediately drawn to those areas to identify potential contraventions of law. Thus, the disclosed system 200 provides an effective and efficient tool to enable a user to quickly analyze a large set of intellectual property rights for potential contraventions of law.

Referring to Figures 9 and 10, one embodiment of an encoding of a directed acyclic graph 248 is illustrated. As previously described, this encoding may place the directed acyclic graph 248 in a format that is suitable for visual representation. In the illustrated embodiment, the encoding is presented in a simple text-based language called the "Dot" language to describe graphs and their properties. The Dot language enables a user to specify nodes, edges (i.e., connectors 252), and other attributes of a directed acyclic graph 248 as previously described. A graph visualization software package such as Graphviz may be used to process the encoding to generate a visual representation of the directed acyclic graph 248.

As shown in the encoding, the "nodesep" and "ranksep" attributes 900 may be used to establish spacing between nodes within a rank (a layer of nodes) and spacing between ranks. The "splines" attribute 902 may be used to control the routing and appearance of connectors 252 between nodes 250 in the directed acyclic graph 248. In this example, the connectors 252 are specified to be implemented as "curved" lines. The encoding also defines each of the nodes 250 and associated attributes 234 in the directed acyclic graph 248. This may include defining any emphasis or highlighting that is assigned to the nodes 250 that have associated potential contraventions of law. The encoding also defines the connectors 252 (i.e., edges) between nodes 250. This may include defining any emphasis or highlighting that is assigned to connectors 252 where potential contraventions of law have been found.

The flowcharts and block diagrams in the Figures illustrate the architecture, functionality, and operation of possible implementations of systems, methods, and computer program products according to various embodiments of the present invention. In this regard, each block in the flowcharts or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other implementations may not require all of the disclosed steps to achieve the desired functionality. It will also be noted that each block of the block diagrams and/or flowchart illustrations, and combinations of blocks in the block diagrams and/or flowchart illustrations, may be implemented by special purpose hardware-based systems that perform the specified functions or acts, or combinations of special purpose hardware and computer instructions.

## Claims

1. A method for identifying potential contraventions of law with respect to intellectual property rights, the method comprising:
identifying a set of related intellectual property rights;
analyzing the set to determine potential contraventions of law associated with the set;
encoding the related intellectual property rights as nodes in a directed acyclic graph capable of visual representation;
encoding relationships between the related intellectual property rights as connectors between the nodes;
emphasizing particular nodes to indicate potential contraventions of law for the associated intellectual property rights; and
emphasizing particular connectors to indicate potential contraventions of law for the associated relationships between the intellectual property rights.

2. The method of claim 1, wherein encoding the related intellectual property rights as nodes further comprises providing attributes associated with the related intellectual property rights that are displayable on the nodes.

3. The method of claim 2, wherein the attributes comprise at least one of patent number, patent application serial number, practitioner registration number, application type, filing date, and entity status.

4. The method of claim 1, wherein emphasizing comprises using at least one of line color, fill color, line weight, line type, line pattern, object shape, and labels to emphasize.

5. The method of claim 1, further comprising labeling the connectors with attributes of the corresponding relationships.

6. The method of claim 1, further comprising labeling the connectors with differences between nodes associated with the corresponding relationships.

7. The method of claim 1, wherein the nodes represent at least one of patents and patent applications.

8. The method of claim 7, wherein the contraventions of law comprise at least one of issues with inventorship, claims of priority, filing bar dates, and entity status.

9. A system for identifying potential contraventions of law with respect to intellectual property rights, the system comprising:
at least one processor;
at least one memory device operably coupled to the at least one processor and storing instructions for execution on the at least one processor, the instructions causing the at least one processor to:
identify a set of related intellectual property rights;
analyze the set to determine potential contraventions of law associated with the set;
encode the related intellectual property rights as nodes in a directed acyclic graph capable of visual representation;
encode relationships between the related intellectual property rights as connectors between the nodes;
emphasize particular nodes to indicate potential contraventions of law for the associated intellectual property rights; and
emphasize particular connectors to indicate potential contraventions of law for the associated relationships between the intellectual property rights.

10. The system of claim 9, wherein encoding the related intellectual property rights as nodes further comprises providing attributes associated with the related intellectual property rights that are displayable on the nodes.

11. The system of claim 10, wherein the attributes comprise at least one of patent number, patent application serial number, practitioner registration number, application type, filing date, and entity status.

12. The system of claim 9, wherein emphasizing comprises using at least one of line color, fill color, line weight, line type, line pattern, object shape, and labels to emphasize.

13. The system of claim 9, wherein the instructions further cause the at least one processor to label the connectors with attributes of the corresponding relationships.

14. The system of claim 9, wherein the instructions further cause the at least one processor to label the connectors with differences between nodes associated with the corresponding relationships.

15. The system of claim 9, wherein the nodes represent at least one of patents and patent applications.

16. The system of claim 15, wherein the contraventions of law comprise at least one of issues with inventorship, claims of priority, filing bar dates, and entity status.

17. A computer program product for identifying potential contraventions of law with respect to intellectual property rights, the computer program product comprising a computer-readable storage medium having computer-usable program code embodied therein, the computer-usable program code configured to perform the following when executed by at least one processor:
identify a set of related intellectual property rights;
analyze the set to determine potential contraventions of law associated with the set;
encode the related intellectual property rights as nodes in a directed acyclic graph capable of visual representation;
encode relationships between the related intellectual property rights as connectors between the nodes;
emphasize particular nodes to indicate potential contraventions of law for the associated intellectual property rights; and
emphasize particular connectors to indicate potential contraventions of law for the associated relationships between the intellectual property rights.

18. The computer program product of claim 17, wherein encoding the related intellectual property rights as nodes further comprises providing attributes associated with the related intellectual property rights that are displayable on the nodes.

19. The computer program product of claim 18, wherein the attributes comprise at least one of patent number, patent application serial number, practitioner registration number, application type, filing date, and entity status.

20. The computer program product of claim 17, wherein emphasizing comprises using at least one of line color, fill color, line weight, line type, line pattern, object shape, and labels to emphasize.
